# EUROPEAN PATENT APPLICATION

(11) **EP 3 135 612 A1**
(43) Date of publication of application: **01.03.2017**
(21) Application number: 16182583.1
(22) Date of filing: 03.08.2016
(51) Int. Cl.: B65G 17/22, B23Q 3/157, B23Q 3/155

(54) **POT CONVEYING SYSTEM**

(30) Priority: 19.08.2015 JP 2015161958
(71) Applicant: Kitamura Machinery Co. Ltd., Takaoka-shi Toyama 939-1104 (JP)
(72) Inventor: Kitamura, Akihiro, Takaoka-shi, Toyama 939-1104 (JP); Kitamura, Kosaku, Takaoka-shi, Toyama 939-1104 (JP); Yamada, Shigeru, Takaoka-shi, Toyama 939-1104 (JP)
(74) Representative: Patentanwälte Ruff, Wilhelm, Beier, Dauster & Partner mbB

(57) **Abstract**

A plurality of pot support members (10) each for detachably supporting the pot are connected, and an endless track is generated for guiding the pot support members driven by sprocket members. Each of the pot support members is supported with a pair of pins (12) so that the pot support members are connected into a chain-like formation. The pitch (P1) between the pair of pins for supporting the pot support member is made substantially equal to a pitch (P3) between the pins of the adjacent pot support members so as to allow the resultant track to meander both inward and outward.

## Description

### BACKGROUND

The present invention relates to a pot conveying system configured to connect a plurality of pot support members, each of which detachably supports the pot, and generate an endless track for guiding those members driven by sprocket members.

Generally, tools and works used for the machine tool will be set in the respective pots, and indexably arranged on the endless track of the pot conveying system.

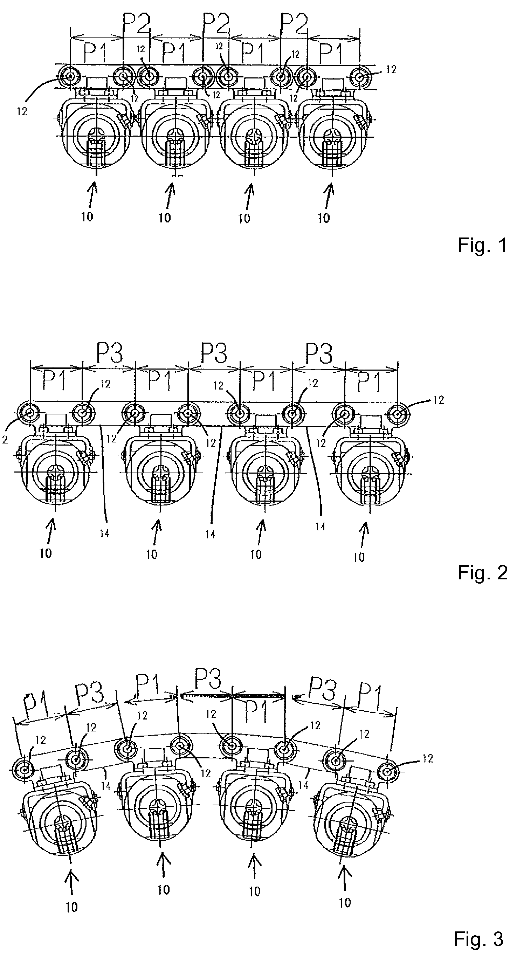

The endless track serves to guide a large number of pot support members 10 which are endlessly connected with pins 12 into a chain-like formation as shown in Fig. 1 through driving operation by the sprocket member.

### SUMMARY

The generally employed pot conveying system disclosed in Japanese Patent No. 3578317 is designed to set the pitch P2 between pins of the adjacent pot support members to be shorter than the pitch P1 between a pair of pins for supporting the pot support member for the purpose of arranging the pots as large number as possible. Thereby, in the case where the resultant track is bent downward in Fig. 1, that is, inward, the respective sides of the adjacent pots are brought into contact with each other. Therefore, the generally employed pot conveying system has difficulty in bending the track inward into a concave formation at the side from which the pot is extracted.

In consideration of the aforementioned problem of the generally employed art, it is an object of the present invention to provide a pot conveying system configured to allow inward bending of an endless track in the form different from the pot conveying system disclosed in Japanese Patent No. 3578317.

The present invention is applicable to the pot conveying system configured as described below.

For example, the present invention provides a pot conveying system configured to connect a plurality of pot support members (10) each for detachably supporting a pot, and generate an endless track for guiding the pot support members (10) driven by sprocket members. Each of the pot support members (10) is supported with a pair of pins (12), a large number of pot support members are connected to the endless using the pairs of pins (12), and a pitch P1 between the pair of pins for supporting the pot support member (10) is made substantially equal to a pitch P3 between the pins of adjacent pot support members so that the endless track is bent inward at least at one position to allow a part of the endless track to have a concave part.

The present invention is applied to the pot conveying system of not only the conveyor chain type (simply referred to as chain), but also rotary type, extraction type and the like.

The pot conveying system according to the present invention is capable of meandering the endless track inward at least at one position so as to form the track into a concave shape, thus actualizing the inward track. It is therefore possible to meander the endless track both inward and outward as needed.

The pot conveying system according to the present invention is capable of meandering the endless track both inward and outward, allowing various shapes of the endless track in accordance with requirement.

A pitch P1 between the pair of pins for supporting the pot support member is made substantially equal to a pitch P3 between the pins of the adjacent pot support members (10). This makes it possible to arbitrarily increase or decrease the curvature radius of the concave part of the track.

### BRIEF DESCRIPTION OF THE DRAWINGS

Fig. 1 is a plan view partially showing a generally employed pot conveying system;
Fig. 2 is a plan view showing a part of an endless track of a pot conveying system according to the present invention;
Fig. 3 is a plan view showing an inward bent part of the pot conveying system as shown in Fig. 2; and
Figs. 4A, 4B and 4C show formation examples of the pot conveying system, respectively.

### DETAILED DESCRIPTION

As a preferred example of the pot conveying system according to the present invention, one pot support member is supported with a pair of pins, and each of a large number of the pot support members is connected by a pair of pins, respectively into a chain-like formation. As a result, an endless track is generated so as to ensure meandering both inward and outward. The endless track has an inward bent part at least at one position so that the resultant endless track has the concave part.

The pitch P1 between the pair of pins for supporting the pot support member (10) is made substantially equal to the pitch P3 between the pins of the adjacent pot support members. In this case, the curvature radius of the concave part of the track may be arbitrarily adjusted.

Preferably, the pot is supported so as to have the center axis aligned with a point intermediate between the two pins for connecting the pot support members, respectively. In such a case, the track for the pair of pins substantially coincides with the track for the center axis of the pot in the linear part of the endless track.

### EMBODIMENT

An embodiment according to the present invention will be described referring to the drawings.

Fig. 2 is a plan view showing a main part of the pot conveying system according to the present invention.

The pot conveying system is configured to connect a large number of pot support members 10 at the respective both side ends with a pair of pins 12 via a plate 14 into a chain-like formation. Those pot support members 10 are driven by not shown sprocket members (see Japanese Patent No. 3578317) so as to generate the endless track for guiding the pot support members. Upon driving operation by the sprocket members, the endless track allows execution of the index control by a not shown drive motor.

The pot support member 10 as shown in Fig. 2 has a generally C-like shape when seen from above. The pins 12 are provided on projecting parts at both sides, and both ends of the plate 14. The pot support members constitute the endless chain-like formation on the whole.

The pot support member 10 has an opening which accommodates the pot detachably in sliding movement (see Japanese Patent No. 3578317).

The pot may be the tool pot and the work pot used for the machine tool. The tool holder and the work holder are also available.

The pin simply described herein refers to the one used for the normal roller chain.

The pot support members 10 connected into the chain-like formation may be guided by five sprocket members, for example. Fig. 3 shows an example of an inward meandered part of the endless track.

Preferably, the pot is supported by the pot support member 10 so that the center axis of the pot is aligned with the point intermediate between the pins 12 at both sides of the pot support member 10. In this case, the track for the center axis of the pot substantially coincides with the track for the pin in the linear part of the track. The connection position of the pin may be displaced from the aforementioned arrangement to a slight degree.

As the example shown in Fig. 3 clearly shows, the distance between the pots of the adjacent pot support members 10 may be arbitrarily set either by decreasing the distance (by bringing them to be closer)(in this case, the curvature radius is small), or increasing the distance (in this case, the curvature radius is large) so long as the support members are smoothly meandered inward.

Although not shown in Figs. 2 and 3, the sprocket member includes a pin engagement part and a pot storage part as disclosed in Japanese Patent No. 3578317. The pin engagement part engaged with the pin, the pin engagement part and the pot storage part are alternately arranged in the circumferential direction. The pin engagement part is positioned at the side outer than the pot storage part when seen from the radial direction. The pin engagement part has a shape corresponding to the outer shape of the pin so as to allow the pin to be smoothly engaged or disengaged. The pot storage part has a semi-circular shape substantially corresponding to the outer circumference of the corresponding part of the pot. The pot storage part may be arbitrarily shaped so long as it is allowed to accommodate the pot. Such part may be formed to have a polygonal cross section.

Although not shown in the drawing, the pot which has been indexed at the predetermined position is extruded by the sliding unit for replacement. At this time, the pot is guided by the rail.

The pot which has been extruded to the replacement position is held by one support part of an automatic replacement arm, and conveyed to the spindle, for example. The pot is returned in the reverse procedure of the take-out operation.

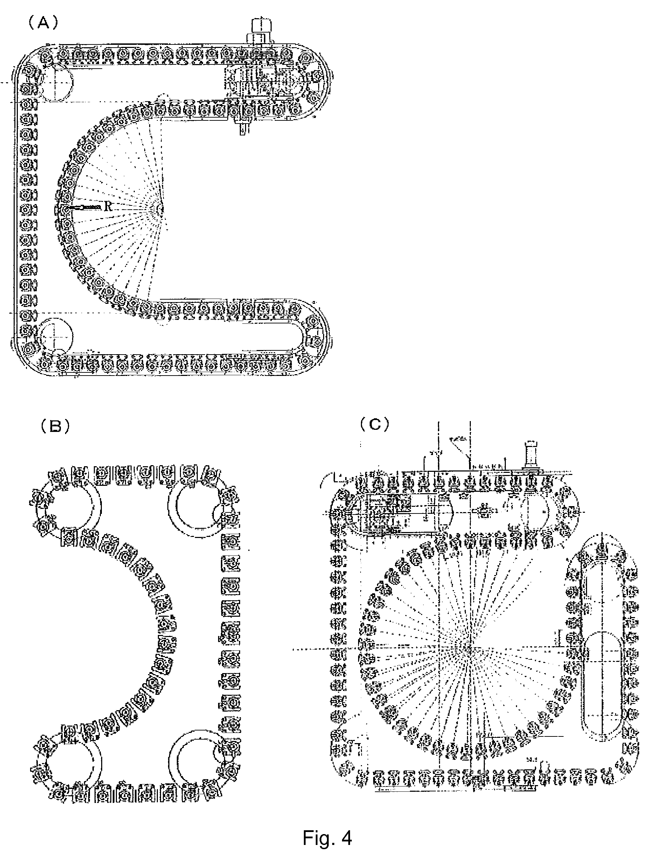

Figs. 4A, 4B and 4C represent formation examples of the pot conveying system according to the present invention, which are different from the example of the conveyor chain type as shown in Figs. 2 and 3.

The present invention is not limited to the embodiment as described above. For example, the endless track may have a plurality of concave and convex parts.

If it is possible to perform inward bending (concave formation) by increasing the radius (curvature radius) as large as possible, the present invention is applicable to any one of the conveyor chain type, the rotary type, the extraction type and the like.

## Claims

1. A pot conveying system configured to connect a plurality of pot support members (10) each for detachably supporting a pot, and generate an endless track for guiding the pot support members (10) driven by sprocket members,
wherein each of the pot support members (10) is supported with a pair of pins (12), and a pitch (P1) between the pair of pins (12) for supporting the pot support member (10) is made substantially equal to a pitch (P3) between the pins (12) of adjacent pot support members (10) so that the endless track is bent inward at least at one position to allow a part of the endless track to have a concave part.

2. The pot conveying system according to claim 1,
wherein the pot is supported so that a center axis of the pot is aligned with a point intermediate between the pair of pins (12) for connecting the pot support member (10).

3. A pot conveying system configured to dispose pins (12) at both sides of each of pot support members (10) so as to be connected to generate an endless track for guiding with a plurality of sprocket members,
wherein a pitch (P1) between the pair of pins (12) that support the pot support member (10) is made substantially equal to a pitch (P3) between the pins (12) of adjacent pot support members (10) so that the endless track is bent inward at least at one position to allow a part of the endless track to have a concave part.

4. The pot conveying system according to claim 3,
wherein the pot is supported so that a center axis of the pot is aligned with a point intermediate between the pair of pins (1) for connecting the pot support member (10).
